# EUROPEAN PATENT APPLICATION

(11) **EP 3 993 096 A1**
(43) Date of publication of application: **04.05.2022**
(21) Application number: 20862451.0
(22) Date of filing: 09.09.2020
(51) Int. Cl.: H01M 4/131, H01M 4/136, H01M 4/525, H01M 4/505, H01M 4/58, H01M 4/36, H01M 4/62, H01M 4/1391, H01M 4/1397, H01M 4/04

(54) **CATHODE FOR LITHIUM SECONDARY BATTERY, MANUFACTURING METHOD THEREFOR, AND LITHIUM SECONDARY BATTERY COMPRISING SAME**

(30) Priority: 10.09.2019 KR 20190112317
(71) Applicant: LG Energy Solution, Ltd., Seoul 07335 (KR)
(72) Inventor: RYU, Jea-Hyeok, Daejeon 34122 (KR)
(74) Representative: Plasseraud IP
(86) International application number: PCT/KR2020/012194
(87) International publication number: WO 2021/049881

(57) **Abstract**

The present disclosure relates to a positive electrode for a lithium secondary battery, including a first positive electrode active material layer including a nickel-rich first positive electrode active material and a second positive electrode active material layer including a solid electrolyte and a second positive electrode active material. The positive electrode for a lithium secondary battery shows improved life characteristics and heat stability by virtue of the introduction of the second positive electrode active material layer.

## Description

### TECHNICAL FIELD

The present disclosure relates to a positive electrode for a lithium secondary battery, a method for manufacturing the same, and a lithium secondary battery including the same.

The present application claims priority to Korean Patent Application No. 10-2019-0112317 filed on September 10, 2019 in the Republic of Korea, the disclosures of which are incorporated herein by reference.

### BACKGROUND ART

Recently, energy storage technology has been given an increasing attention. Efforts into research and development of electrochemical devices have been actualized more and more, as the application of energy storage technology has been extended to energy for cellular phones, camcorders and notebook PC and even to energy for electric vehicles.

In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density, as compared to conventional batteries, such as Ni-MH, Ni-Cd and sulfuric acid-lead batteries using an aqueous electrolyte.

Particularly, as medium-large size batteries have been increasingly in demand, a need for lithium secondary batteries has been increased. More particularly, a need for nickel-rich (high-nickel) ternary positive electrode active material (Liₓ(NiₐCo_{b}Mn_{c})O₂) having high energy density is significantly high.

However, in the case of such a nickel-rich ternary positive electrode active material, it shows the problems of low life characteristics and high-temperature safety. To solve this, there has been an attempt to inhibit side reactions between the positive electrode active material and an electrolyte and to improve life characteristics by coating an oxide, such as Al₂O₃ or AlPO₄, on the surface of the positive electrode active material. However, despite such an attempt, the positive electrode active material still shows low thermal stability.

### DISCLOSURE

### Technical Problem

The present disclosure is designed to solve the problems of the related art, and therefore the present disclosure is directed to providing a positive electrode for a lithium secondary battery having high energy density.

The present disclosure is also directed to providing a positive electrode for a lithium secondary battery having improved life characteristics.

In addition, the present disclosure is directed to providing a positive electrode for a lithium secondary battery having improved thermal stability as well as improved life characteristics.

### Technical Solution

In one aspect of the present disclosure, there is provided a positive electrode for a lithium secondary battery according to any one of the following embodiments.

According to the first embodiment of the present disclosure, there is provided a positive electrode for a lithium secondary battery, including:
a current collector;
a first positive electrode active material layer disposed on at least one surface of the current collector, and including Liₓ(NiₐCobMn_{c})O₂ (0.5 < x < 1.3, a ≥ 0.6, 0 < b < 1, 0 < c < 1, a + b + c = 1) as a first positive electrode active material; and
a second positive electrode active material layer disposed on the first positive electrode active material layer, and including any one of LiCoO₂, LiMn₂O₄, LiAl₂O₃, LiCoPO₄, LiFePO₄ and Liₓ(NiₐCobMn_{c})O₂ (0.5 < x < 1.3, a ≤ 0.5, 0 < b < 1, 0 < c < 1, a + b + c = 1), or a mixture of two or more of them, as a second positive electrode active material, and a solid electrolyte.

According to the second embodiment of the present disclosure, there is provided the positive electrode for a lithium secondary battery as defined in the first embodiment, wherein the second positive electrode active material is coated or doped with the solid electrolyte.

According to the third embodiment of the present disclosure, there is provided the positive electrode for a lithium secondary battery as defined in the first or the second embodiment, wherein the first positive electrode active material layer has a thickness equal to or larger than the thickness of the second positive electrode active material layer.

According to the fourth embodiment of the present disclosure, there is provided the positive electrode for a lithium secondary battery as defined in the third embodiment, wherein the first positive electrode active material layer has a thickness of 20-60 µm.

According to the fifth embodiment of the present disclosure, there is provided the positive electrode for a lithium secondary battery as defined in any one of the third or the fourth embodiment, wherein the second positive electrode active material layer has a thickness of 10-30 µm.

According to the sixth embodiment of the present disclosure, there is provided the positive electrode for a lithium secondary battery as defined in any one of the first to the fifth embodiments, wherein the solid electrolyte is used in an amount of 20 parts by weight or more based on 100 parts by weight of the second positive electrode active material layer.

According to the seventh embodiment of the present disclosure, there is provided the positive electrode for a lithium secondary battery as defined in any one of the first to the sixth embodiments, wherein the solid electrolyte is any one of a polymeric solid electrolyte, a sulfide-based solid electrolyte and an oxide-based solid electrolyte, or a mixture thereof.

According to the eighth embodiment of the present disclosure, there is provided the positive electrode for a lithium secondary battery as defined in the seventh embodiment, wherein the solid electrolyte is an oxide-based solid electrolyte, and the oxide-based solid electrolyte includes any one of LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), LISICON compounds, LIPON compounds, perovskite compounds, NASICON compounds and LLZO compounds, or a mixture of two or more of them.

In another aspect of the present disclosure, there is also provided a lithium secondary battery according to any one of the following embodiments.

According to the ninth embodiment of the present disclosure, there is provided a lithium secondary battery including the positive electrode as defined in any one of the first to the eighth embodiments, a negative electrode, and a separator interposed between the positive electrode and the negative electrode.

According to the tenth embodiment of the present disclosure, there is provided the lithium secondary battery as defined in the ninth embodiment, which is any one of a lithium ion secondary battery, a lithium polymer secondary battery, a lithium metal secondary battery and a lithium ion polymer secondary battery.

In still another aspect of the present disclosure, there is also provided a method for manufacturing a positive electrode for a lithium secondary battery according to any one of the following embodiments.

According to the eleventh embodiment of the present disclosure, there is provided a method for manufacturing a positive electrode for a lithium secondary battery, including the steps of:
preparing a current collector on which a first electrode active material layer including Liₓ(NiₐCobMn_{c})O₂ (0.5 < x < 1.3, a ≥ 0.6, 0 < b < 1, 0 < c < 1, a + b + c = 1) as a first positive electrode active material is coated and dried; and
coating slurry including a mixture of a solid electrolyte with any one of LiCoO₂, LiMn₂O₄, LiAl₂O₃, LiCoPO₄, LiFePO₄ and Liₓ(NiₐCobMn_{c})O₂ (0.5 < x < 1.3, a ≤ 0.5, 0 < b < 1, 0 < c < 1, a + b + c = 1), or a mixture of two or more of them, as a second positive electrode active material, onto the surface of the first positive electrode active material layer, followed by drying, to form a second positive electrode active material layer.

According to the twelfth embodiment of the present disclosure, there is provided the method for manufacturing a positive electrode for a lithium secondary battery as defined in the eleventh embodiment, wherein the second positive electrode active material is coated or doped with the solid electrolyte.

### Advantageous Effects

According to an embodiment of the present disclosure, it is possible to provide a lithium secondary battery having high energy density by using a nickel-rich (high-rich) ternary positive electrode active material (Liₓ(NiₐCo_{b}Mn_{c})O₂).

The positive electrode according to an embodiment of the present disclosure includes the first positive electrode active material layer and the second positive electrode active material layer, wherein the second positive electrode active material layer is in direct contact with an electrolyte, and thus can inhibit the first positive electrode active material layer from being in direct contact with the electrolyte. Therefore, it is possible to inhibit side reactions between the first positive electrode active material and the electrolyte, and to improve thermal stability.

According to an embodiment of the present disclosure, the second positive electrode active material layer includes a solid electrolyte, and the solid electrolyte may function as a cushioning material. Therefore, it is possible to reduce cracking of the first positive electrode active material and the second positive electrode active material, caused by a pressing process for improving the density of the positive electrode, thereby providing improved life characteristics and thermal stability.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

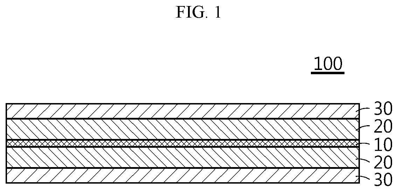

FIG. 1 is a schematic sectional view illustrating the positive electrode according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

As used herein, the expression 'one portion is connected to another portion' covers not only 'a portion is directly connected to another portion' but also 'one portion is connected indirectly to another portion' by way of the other element interposed between them.

Throughout the specification, the expression 'a part includes an element' does not preclude the presence of any additional elements but means that the part may further include the other elements, unless otherwise stated.

In addition, it will be understood that the terms 'comprises' and/or 'comprising', or 'includes' and/or 'including' when used in this specification, refer to the presence of any stated shapes, numbers, steps, operations, members, elements and/or groups thereof, but do not preclude the addition of one or more other shapes, numbers, steps, operations, members, elements and/or groups thereof.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the term 'combination thereof' included in any Markush-type expression means a combination or mixture of one or more elements selected from the group of elements disclosed in the Markush-type expression, and refers to the presence of one or more elements selected from the group.

As used herein, the expression 'A and/or B' means 'A, B or both of them'.

In one aspect, the present disclosure relates to a positive electrode for a lithium secondary battery, a method for manufacturing the same, and a lithium secondary battery including the same.

As medium-large size batteries have been increasingly in demand, a need for lithium secondary batteries has been increased. Particularly, a need for nickel-rich ternary positive electrode active material having high energy density is significantly high.

However, such a nickel-rich ternary positive electrode active material shows the problems of low life characteristics and thermal safety.

The inventors of the present disclosure have conducted intensive studies to provide a positive electrode for a lithium secondary battery, which has improved life characteristics and thermal safety, while maintaining high energy density. As a result, we have found that when using a solid electrolyte to inhibit the nickel-rich positive electrode active material from reacting directly with an electrolyte, it is possible to inhibit side reactions between the electrolyte and the nickel-rich positive electrode active material, and to provide a positive electrode having improved life characteristics and thermal safety by virtue of the solid electrolyte functioning as a cushioning material.

In one aspect of the present disclosure, there is provided a positive electrode for a lithium secondary battery, including:
a current collector;
a first positive electrode active material layer disposed on at least one surface of the current collector, and including Liₓ(NiₐCobMn_{c})O₂ (0.5 < x < 1.3, a ≥ 0.6, 0 < b < 1, 0 < c < 1, a + b + c = 1) as a first positive electrode active material; and
a second positive electrode active material layer disposed on the first positive electrode active material layer, and including any one of LiCoO₂, LiMn₂O₄, LiAl₂O₃, LiCoPO₄, LiFePO₄ and Liₓ(NiₐCobMn_{c})O₂ (0.5 < x < 1.3, a ≤ 0.5, 0 < b < 1, 0 < c < 1, a + b + c = 1), or a mixture of two or more of them, as a second positive electrode active material, and a solid electrolyte.

Hereinafter, the present disclosure will be explained in more detail with reference to FIG. 1.

Referring to FIG. 1, the positive electrode 100 for a lithium secondary battery according to an embodiment of the present disclosure includes: a current collector 10; a first positive electrode active material layer 20 disposed on at least one surface of the current collector; and a second positive electrode active material layer 30 disposed on the first positive electrode active material layer.

Herein, the first positive electrode active material layer 20 includes a nickel-rich positive electrode active material as a first positive electrode active material, and the second positive electrode active material layer 30 includes a solid electrolyte and any positive electrode active material other than nickel-rich positive electrode active materials, as a second positive electrode active material.

In other words, according to an embodiment of the present disclosure, the first positive electrode active material, i.e. the nickel-rich positive electrode active material, is not in direct contact with an electrolyte in a lithium secondary battery obtained subsequently. Therefore, it is possible to reduce side reactions with an electrolyte, and thus to improve the thermal stability of the first positive electrode active material layer.

According to an embodiment of the present disclosure, the first positive electrode active material may include Liₓ(NiₐCobMn_{c})O₂ (wherein 0.5 < x < 1.3, a ≥ 0.6, 0 < b < 1, 0 < c < 1, a + b + c = 1). In other words, the first positive electrode active material is a ternary positive electrode active material including nickel, cobalt and manganese, and a positive electrode active material having a high nickel content.

The present disclosure is directed to solving the problems occurring when the first positive electrode active material is used alone. The positive electrode according to an embodiment of the present disclosure essentially includes the first positive electrode active material, wherein the first positive electrode active material layer including the first positive electrode active material is inhibited from being in direct contact with an electrolyte.

According to an embodiment of the present disclosure, the second positive electrode active material layer is disposed on the first positive electrode active material layer and includes a solid electrolyte and a second positive electrode active material.

The second positive electrode active material is any positive electrode active material other than the first positive electrode active material, and may be a positive electrode active material causing little side reactions with an electrolyte. According to an embodiment of the present disclosure, since the nickel-rich positive electrode active material is applied to the first positive electrode active material layer, it is possible to inhibit side reactions with an electrolyte, while ensuring a high-capacity positive electrode at the same time. Meanwhile, since any positive electrode active material other than nickel-rich positive electrode active materials is used as the second positive electrode active material, it is possible to prevent side reactions with an electrolyte in advance, and to provide a lithium secondary battery with improved thermal safety and life characteristics by virtue of the thermal safety and chemical resistance of the second positive electrode active material.

According to an embodiment of the present disclosure, the second positive electrode active material may include any one of LiCoO₂, LiMn₂O₄, LiAl₂O₃, LiCoPO₄, LiFePO₄, and Liₓ(NiₐCobMn_{c})O₂ (0.5 < x < 1.3, a ≤ 0.5, 0 < b < 1, 0 < c < 1, a + b + c = 1), or a mixture of two or more of them.

According to an embodiment of the present disclosure, the second positive electrode active material may be coated or doped with the solid electrolyte described hereinafter. Herein, the surface of the second positive electrode active material may be coated totally or partially.

According to an embodiment of the present disclosure, the first positive electrode active material layer may have a thickness equal to or larger than the thickness of the second positive electrode active material layer. For example, the first positive electrode active material layer may have a thickness of 20-60 µm, or 40-60 µm. In addition, the second positive electrode active material layer may have a thickness of 10-30 µm, or 20-30 µm. When the first positive electrode active material layer has a thickness equal to or larger than the thickness of the second positive electrode active material layer as mentioned above, it is possible to provide a positive electrode for a lithium secondary battery having high energy density and showing improved life characteristics and thermal safety by virtue of the inhibition of side reactions with an electrolyte.

According to an embodiment of the present disclosure, the second positive electrode active material layer includes a solid electrolyte.

The solid electrolyte is not reactive to the first positive electrode active material or the second positive electrode active material, and can inhibit the electrolyte and the first positive electrode active material from being in direct contact with each other.

In addition, the solid electrolyte functions as a cushioning material to inhibit cracking of positive electrode active material particles during a pressing step in manufacturing a positive electrode, and thus can improve life characteristics and thermal safety.

According to an embodiment of the present disclosure, the solid electrolyte may include any one of a polymeric solid electrolyte, a sulfide-based solid electrolyte and an oxide-based solid electrolyte, or a mixture of two or more of them.

According to an embodiment of the present disclosure, the polymeric solid electrolyte may be a solid polymeric electrolyte formed by adding a polymer resin to a solvated lithium salt, or a polymeric gel electrolyte formed by impregnating a polymer resin with an organic electrolyte containing an organic solvent and a lithium salt.

For example, the solid polymeric electrolyte may include, as a polymer resin, any one selected from the group consisting of a polyether polymer, a polycarbonate polymer, an acrylate polymer, a polysiloxane polymer, a phosphazene polymer, polyethylene derivatives, alkylene oxide derivatives, a phosphate polymer, a polyagitation lysine, a polyester sulfide, a polyvinyl alcohol, a polyvinylidene fluoride and a polymer containing an ionically dissociable group, or a mixture of two or more of them. However, the scope of the present disclosure is not limited thereto.

According to an embodiment of the present disclosure, the solid polymeric electrolyte may include, as a polymer resin, any one selected from the group consisting of a branched copolymer, a comb-like polymer resin and a crosslinked polymer resin, including polyethylene oxide (PEO) backbone copolymerized with a comonomer including an amorphous polymer, such as PMMA, polycarbonate, polydimethylsiloxane (pdms) and/or phosphazene, or a mixture of two or more of them.

According to an embodiment of the present disclosure, the polymer gel electrolyte includes a lithium salt-containing organic electrolyte and a polymer resin, wherein the organic electrolyte is used in an amount of 60-400 parts by weight based on the weight of the polymer resin. There is no particular limitation in the polymer resin used for the gel electrolyte, and particular examples of the polymer resin include any one selected from the group consisting of polyvinyl chloride (PVC) polymers, poly(methyl methacrylate) (PMMA) polymers, polyacrylonitrile (PAN), polyvinylidene fluoride (PVdF) and poly(vinylidene fluoride-co-hexafluoropropylene) (PVdF-HFP), or a mixture of two or more of them. However, the scope of the present disclosure is not limited thereto.

In addition, as an electrolyte salt, the lithium salt is an ionizable lithium salt and may be represented by Li⁺X⁻. The anion (X) of lithium salt is not particularly limited and particular examples thereof include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂', CH₃CO₂', SCN⁻, (CF₃CF₂SO₂)₂N⁻, or the like.

According to an embodiment of the present disclosure, the sulfide-based solid electrolyte is an electrolyte ingredient containing a sulfur atom and is not particularly limited. The sulfide-based solid electrolyte may include at least one of a crystalline solid electrolyte, a non-crystalline solid electrolyte (vitreous solid electrolyte) and a glass ceramic solid electrolyte. Particular examples of the sulfide-based solid electrolyte may include, but are not limited to: LPS-type sulfides containing sulfur and phosphorus, Li₄₋ₓGe₁₋ₓPₓS₄ (wherein x is 0.1-2, particularly x is 3/4, 2/3), Li_{10±1}MP₂X₁₂ (wherein M = Ge, Si, Sn, Al, X = S, Se), Li_{3.833}Sn_{0.833}As_{0.166}S₄, Li₄SnS₄, Li_{3.25}Ge_{0.25}P_{0.75}S₄, Li₂S-P₂S₅, B₂S₃-Li₂S, xLi₂S-(100-x)P₂S₅ (wherein x is 70-80), Li₂S-SiS₂-Li₃N, Li₂S-P₂S₅-LiI, Li₂S-SiS₂-LiI, Li₂S-B₂S₃-LiI, or the like.

According to an embodiment of the present disclosure, the oxide-based solid electrolyte may be selected suitably from LLT-based electrolytes with a perovskite structure, such as Li₃ₓLa_{2/3-x}TiO₃, LISICON-based electrolytes, such as Li₁₄Zn(GeO₄)₄, LATP-based electrolytes, such as Li_{1.3}Al_{0.3}Ti_{1.7}(PO₄)₃, LAGP-based electrolytes, such as (Li₁₊ₓGe₂₋ₓAlₓ(PO₄)₃), phosphate-based electrolytes, such as LiPON, or the like.

According to an embodiment of the present disclosure, when using an oxide-based solid electrolyte, it is possible to further improve thermal stability as compared to a polymeric solid electrolyte or a sulfide-based solid electrolyte.

According to an embodiment of the present disclosure, the solid electrolyte may be used in an amount of 20 parts by weight or more, or 25 parts by weight or more, particularly 28.5-50 parts by weight, based on 100 parts by weight of the second positive electrode active material layer. Within the above-defined range, it is possible to minimize a decrease in energy density caused by an increased amount of solid electrolyte and to improve thermal stability at the same time.

According to an embodiment of the present disclosure, the first positive electrode active material layer and the second positive electrode active material layer may further include a conductive material and/or a binder polymer. If necessary, a different type of compound may be used. In addition, the first positive electrode active material layer and the second positive electrode active material layer may have the same or a different composition of ingredients, except the conductive material.

The conductive material is not particularly limited, as long as it is an electroconductive material that causes no chemical change in an electrochemical device. The same conductive material or different conductive materials may be used in the first positive electrode active material layer and the second positive electrode active material layer. Each of the first positive electrode active material layer and the second positive electrode active material layer may independently use a carbon black, a graphite, carbon fibers, carbon nanotubes, a metal powder, a conductive metal oxide, an organic conductive material, or the like. Commercially available products of conductive materials may include acetylene black (available from Chevron Chemical Company, Gulf Oil Company, etc.), ketjen Black EC (available from Armak Company), Vulcan XC-72 (available from Cabot Company), Super P (available from MMM Company), or the like.

According to an embodiment of the present disclosure, any binder polymer used conventionally in the art may be used without particular limitation. For example, various types of binder polymers, such as polyvinylidene fluoride-co-hexafluoro propylene (PVDF-co-HFP), polyvinylidene fluoride (PVDF), polyacrylonitrile, polymethyl methacrylate, styrene-butadiene rubber (SBR) or carboxymethyl cellulose (CMC), may be used.

The current collector used for the positive electrode is a metal having high conductivity, and any metal may be used without particular limitation, as long as it allows easy adhesion of the positive electrode active material and binder polymer and has no reactivity in the voltage range of an electrochemical device. Particular examples of the positive electrode current collector include foil made of aluminum, nickel or a mixture thereof.

The negative electrode that may be used together with the positive electrode may be at least one selected from the group consisting of a lithium metal, a carbonaceous material and a metallic compound, or a mixture of two or more of them.

Particular examples of the carbonaceous material include low crystalline carbon and high crystalline carbon. Typical examples of low crystalline carbon include soft carbon and hard carbon. Typical examples of high crystalline carbon include Kish graphite, pyrolytic carbon, mesophase pitch based carbon fibers, meso-carbon microbeads, mesophase pitches, and high-temperature baked carbon, such as petroleum or coal tar pitch-derived cokes.

Particular examples of the metallic compound include compounds containing at least one metal element, such as Si, Ge, Sn, Pb, P, Sb, Bi, Al, Ga, In, Ti, Mn, Fe, Co, Ni, Cu, Zn, Ag, Mg, Sr and Ba. Although the metallic compound may be used in any one of the forms, including simple substance, alloy, oxides (TiO₂, SnO₂, etc.), nitride, sulfide, boride and alloy with lithium, simple substance, oxides and alloy with lithium may have high capacity. Particularly, the metallic compound may include at least one element selected from Si, Ge and Sn, and the metallic compound including at least one element selected from Si and Sn can provide a battery with higher capacity.

Non-limiting examples of the current collector for the negative electrode include foil made of copper, gold, nickel, copper alloy or a mixture thereof. In addition, substrates including the above-mentioned materials may be stacked and used as the current collector.

Each of the positive electrode and the negative electrode may be obtained by blending an active material, a conductive material, a binder polymer and a high-boiling point solvent to provide two types of electrode active material slurry having a different content of conductive material, applying each electrode active material slurry onto the current collector to form two layers, carrying out drying and press molding, and carrying out heat treatment at a temperature of 50-250°C for 2 hours under vacuum.

In still another aspect, there is provided an electrochemical device which includes: an electrode assembly including a positive electrode, a negative electrode and a separator interposed between the positive electrode and the negative electrode; a nonaqueous electrolyte injected to the electrode assembly; and a battery casing receiving the electrode assembly and the nonaqueous electrolyte, wherein at least one of the positive electrode and the negative electrode is the electrode according to the present disclosure.

According to the present disclosure, the separator may be any porous substrate used for an electrochemical device. Particular examples of the porous substrate may include a polyolefin-based porous membrane or nonwoven web, but are not limited thereto.

Particular examples of the polyolefin-based porous membrane include a membrane formed of a polymer including a polyolefin, such as polyethylene (e.g. high density polyethylene, linear low density polyethylene, low density polyethylene or ultrahigh molecular weight polyethylene), polypropylene, polybutyelene or polypentene, alone or in combination.

In addition to the polyolefin-based nonwoven web, particular examples of the nonwoven web include a nonwoven web formed of a polymer including polyethylene terephthalate, polybutylene terephthalate, polyester, polyacetal, polyamide, polycarbonate, polyimide, polyetheretherketone, polyethersulfone, polyphenylene oxide, polyphenylene sulfide or polyethylene naphthalene, alone or in combination. The structure of the nonwoven web may be a spunbond nonwoven web or melt blown nonwoven web including long fibers.

There is no particular limitation in thickness of the porous substrate. However, the porous substrate may have a thickness of 5-50 µm. In addition, the size of pores present in the porous substrate and the porosity are not particularly limited. However, the pore size and porosity may be 0.01-50 µm and 10-95%, respectively.

Meanwhile, the porous substrate may further include a porous coating layer including inorganic particles and a binder polymer, on at least one surface thereof, in order to improve the mechanical strength of the separator including the porous substrate and to inhibit a short-circuit between the positive electrode and the negative electrode.

Meanwhile, the nonaqueous electrolyte may include an organic solvent and an electrolyte salt. The electrolyte salt is a lithium salt. Any lithium salt used conventionally for a nonaqueous electrolyte for a lithium secondary battery may be used without particular limitation. For example, the anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂, CH₃CO₂, SCN⁻ and (CF₃CF₂SO₂)₂N⁻, or a mixture of two or more of them.

Particular examples of the organic solvent that may be contained in the nonaqueous electrolyte may include those used conventionally for an electrolyte for a lithium secondary battery with no particular limitation. For example, it is possible to use ethers, esters, amides, linear carbonates or cyclic carbonates alone or in combination.

Typical examples of the organic solvent may include carbonate compounds such as cyclic carbonates, linear carbonates or mixtures thereof.

Particular examples of the cyclic carbonate compounds include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate and halides thereof, or a mixture of two or more of them. Particular examples of such halides include fluoroethylene carbonate (FEC) but are not limited thereto.

In addition, particular examples of the linear carbonate compounds include any one selected from the group consisting of dimethyl carbonate (DMC), diethyl carbonate (DEC), dipropyl carbonate, ethyl methyl carbonate (EMC), methyl propyl carbonate and ethyl propyl carbonate, or a mixture of two or more of them, but are not limited thereto.

Particularly, ethylene carbonate and propylene carbonate, which are cyclic carbonates among the carbonate organic solvents, have a high dielectric constant and dissociate the lithium salt in an electrolyte well. In addition, it is possible to prepare an electrolyte having high electroconductivity, when using such cyclic carbonates in combination with low-viscosity low-dielectric constant linear carbonates, such as dimethyl carbonate and diethyl carbonate, at an adequate ratio.

Further, among the organic solvents, particular examples of the ethers may include any one selected from the group consisting of dimethyl ether, diethyl ether, dipropyl ether, methyl ethyl ether, methyl propyl ether and ethyl propyl ether, or a mixture of two or more of them, but are not limited thereto.

Among the organic solvents, particular examples of the esters include any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more of them, but are not limited thereto.

Injection of the nonaqueous electrolyte may be carried out in an adequate step during the process for manufacturing a battery depending on the manufacturing process of a final product and properties required for a final product. In other words, injection of the nonaqueous electrolyte may be carried out before the assemblage of a battery or in the final step of the assemblage of a battery.

Herein, the electrochemical device includes any device which carries out electrochemical reaction, and particular examples thereof include all types of primary batteries, secondary batteries, fuel cells, solar cells or capacitors such as super capacitor devices. Particularly, the secondary batteries may include lithium secondary batteries, including lithium metal secondary batteries, lithium ion secondary batteries, lithium polymer secondary batteries or lithium ion polymer secondary batteries.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1- Manufacture of Positive Electrode

First, 95 parts by weight of LiNi_{0.88}Co_{0.09}Mn_{0.03}O₂ as the first positive electrode active material, 2.5 parts by weight of carbon black as a conductive material and 2.5 parts by weight of polyvinylidene fluoride (PVDF) as a binder polymer were added to N-methyl-2-pyrrolidone as a solvent, based on 100 parts by weight of the first positive electrode active material layer, to prepare the first positive electrode active material slurry.

Next, 66.5 parts by weight of LiNi_{0.5}Co_{0.2}Mn_{0.3}O₂ as the second positive electrode active material, 28.5 parts by weight of Li_{1.3}Ti_{1.7}Al_{0.3}(PO₄)₃ as a solid electrolyte, 2.5 parts by weight of carbon black as a conductive material and 2.5 parts by weight of polyvinylidene fluoride as a binder polymer were added to N-methyl-2-pyrrolidone as a solvent, based on 100 parts by weight of the second positive electrode active material layer, to prepare the second positive electrode active material slurry. In other words, the solid electrolyte was in a state mixed simply with the second positive electrode active material in the second positive electrode active material slurry.

The first positive electrode active material slurry was coated on aluminum foil to a thickness of 60 µm and vacuum dried, and then the second positive active material slurry was applied thereto to a thickness of 20 µm, followed by drying.

In this manner, provided was a positive electrode for a lithium secondary battery including the first positive electrode active material layer having a thickness of 60 µm and the second positive electrode active material layer having a thickness of 20 µm.

### Example 2- Manufacture of Positive Electrode

A positive electrode for a lithium secondary battery was obtained in the same manner as Example 1, except that the first positive electrode active material layer had a thickness of 60 µm and the second positive electrode active material layer had a thickness of 10 µm.

### Example 3- Manufacture of Positive Electrode

A positive electrode for a lithium secondary battery was obtained in the same manner as Example 1, except that the first positive electrode active material layer had a thickness of 60 µm and the second positive electrode active material layer had a thickness of 30 µm.

### Comparative Example 1

A positive electrode for a lithium secondary battery was obtained in the same manner as Example 1, except that the second positive electrode active material slurry was prepared by using no solid electrolyte.

### Comparative Example 2

First, 95 parts by weight of LiNi_{0.88}Co_{0.09}Mn_{0.03}O₂ as a positive electrode active material, 2.5 parts by weight of carbon black as a conductive material and 2.5 parts by weight of polyvinylidene fluoride (PVDF) as a binder polymer were added to N-methyl-2-pyrrolidone as a solvent to prepare positive electrode active material slurry.

The positive electrode active material slurry was coated on aluminum foil to a thickness of 80 µm and vacuum dried. In this manner, a positive electrode including a positive electrode active material layer having a thickness of 80 µm was obtained.

In other words, Comparative Example 2 is an embodiment including a single layer of positive electrode active material layer.

### Test Example 1: Determination of High-Temperature Life Characteristics of Lithium Secondary Battery

Each of the positive electrodes according to Examples 1-3 and Comparative Examples 1 and 2 was laminated with a lithium metal negative electrode and a separator, and an electrolyte including 1 M LiPF₆ dissolved in a solvent containing EC:DMC:EMC (1:2:1) was injected thereto to obtain a coin half-cell according to Examples 1-3 and Comparative Examples 1 and 2.

Each of the coin half-cells according to Examples 1-3 and Comparative Examples 1 and 2 was charged at 45°C to 4.2 V in a constant current mode at 0.33 C with a cut-off of 1/200 C, and then discharged to 2.5 V in a constant current mode at 0.33 C.

The charge/discharge behavior was taken as 1 cycle and 30 charge/discharge cycles were repeated to determine the high-temperature (45°C) life characteristics according to Examples 1-3 and Comparative Examples 1 and 2. The results are shown in Table 1.

**[Table 1]**

| | Capacity Retention (%) |
|---|---|
| Ex. 1 | 94.8 |
| Ex. 2 | 93.6 |
| Ex. 3 | 95.3 |
| Comp. Ex. 1 | 93.1 |
| Comp. Ex. 2 | 89.6 |

As shown in Table 1, Examples 1-3 show a higher capacity retention as compared to Comparative Examples 1 and 2. Particularly, Examples 1-3 show a significantly high capacity retention corresponding to 5.7% higher than the capacity retention of Comparative Example 2 merely including a single layer of positive electrode active material layer. In addition, it can be seen that when the thickness of the second positive electrode active material layer is increased in the order of 10 µm, 20 µm and 30 µm according to Example 2, Example 1 and Example 3, capacity retention is also increased.

### Test Example 2: Evaluation of Thermal Stability

Each of the positive electrodes according to Examples 1-3 and Comparative Examples 1 and 2 was laminated with a lithium metal negative electrode and a separator, and an electrolyte including 1 M LiPF₆ dissolved in a solvent containing EC:DMC:EMC (1:2:1) was injected thereto to obtain a coin half-cell according to Examples 1-3 and Comparative Examples 1 and 2.

Each of the coin half-cells was charged/discharged at 0.2 C in a constant current mode to 4.2-2.5 V, and then charged to 4.2 V in a constant current mode at 0.2 C.

After each coin half-cell was charged, it was recovered and perforated with a size of 4 Φ to obtain about 4.5 mg of each positive electrode. Then, the positive electrode was analyzed in terms of a change in calory by warming it to 350°C at a rate of 10°C/min through a differential scanning calorimeter (DSC). The results are shown in the following Table 2.

**[Table 2]**

| | Heat emission temperature (°C) | Calorific value (J/g) |
|---|---|---|
| Ex. 1 | 228.4 | 1089 |
| Ex. 2 | 226.6 | 1165 |
| Ex. 3 | 230.3 | 1013 |
| Comp. Ex. 1 | 223.9 | 1367 |
| Comp. Ex. 2 | 214.8 | 2048 |

As can be seen from Table 2, Examples 1-3 show a higher heat emission temperature and a lower calorific value, as compared to comparative Examples 1 and 2, and thus have higher safety.

It should be understood that the detailed description is given by way of illustration only and various changes and modifications may be made without departing from the scope of the invention as defined in the following claims. Therefore, the embodiments disclosed herein are not intended to limit the scope of the present disclosure but are for illustrative purposes only, and the scope of the present disclosure is not limited thereto. It should be also understood that the scope of the present disclosure is defined by the following claims and all equivalents thereof are also included in the scope of the present disclosure.

## Claims

1. A positive electrode for a lithium secondary battery, comprising:
a current collector;
a first positive electrode active material layer disposed on at least one surface of the current collector, and comprising Liₓ(NiₐCobMn_{c})O₂ (0.5 < x < 1.3, a ≥ 0.6, 0 < b < 1, 0 < c < 1, a + b + c = 1) as a first positive electrode active material; and
a second positive electrode active material layer disposed on the first positive electrode active material layer, and comprising any one of LiCoO₂, LiMn₂O₄, LiAl₂O₃, LiCoPO₄, LiFePO₄ and Liₓ(NiₐCobMn_{c})O₂ (0.5 < x < 1.3, a ≤ 0.5, 0 < b < 1, 0 < c < 1, a + b + c = 1), or a mixture of two or more of them, as a second positive electrode active material, and a solid electrolyte.

2. The positive electrode for a lithium secondary battery according to claim 1, wherein the second positive electrode active material is coated or doped with the solid electrolyte.

3. The positive electrode for a lithium secondary battery according to claim 1, wherein the first positive electrode active material layer has a thickness equal to or larger than the thickness of the second positive electrode active material layer.

4. The positive electrode for a lithium secondary battery according to claim 3, wherein the first positive electrode active material layer has a thickness of 20-60 µm.

5. The positive electrode for a lithium secondary battery according to claim 3, wherein the second positive electrode active material layer has a thickness of 10-30 µm.

6. The positive electrode for a lithium secondary battery according to claim 1, wherein the solid electrolyte is included in an amount of 20 parts by weight or more based on 100 parts by weight of the second positive electrode active material layer.

7. The positive electrode for a lithium secondary battery according to claim 1, wherein the solid electrolyte is any one of a polymeric solid electrolyte, a sulfide-based solid electrolyte and an oxide-based solid electrolyte, or a mixture thereof.

8. The positive electrode for a lithium secondary battery according to claim 7, wherein the solid electrolyte is an oxide-based solid electrolyte, and the oxide-based solid electrolyte comprises any one of LLTO compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)_{3-y} (wherein 0 ≤ x ≤ 1, 0 ≤ y ≤ 1), LiAlₓZr₂₋ₓ(PO₄)₃ (wherein 0 ≤ x ≤ 1, 0 ≤ y ≤ 1), LiTiₓZr₂₋ₓ(PO₄)₃ (wherein 0 ≤ x ≤ 1, 0 ≤ y ≤ 1), LISICON compounds, LIPON compounds, perovskite compounds, NASICON compounds and LLZO compounds, or a mixture of two or more of them.

9. A lithium secondary battery comprising the positive electrode as defined in any one of claims 1 to 8, a negative electrode, and a separator interposed between the positive electrode and the negative electrode.

10. The lithium secondary battery according to claim 9, which is any one of a lithium ion secondary battery, a lithium polymer secondary battery, a lithium metal secondary battery and a lithium ion polymer secondary battery.

11. A method for manufacturing a positive electrode for a lithium secondary battery, comprising the steps of:
preparing a current collector on which a first electrode active material layer comprising Liₓ(NiₐCobMn_{c})O₂ (0.5 < x < 1.3, a ≥ 0.6, 0 < b < 1, 0 < c < 1, a + b + c = 1) as a first positive electrode active material is coated and dried; and
coating slurry comprising a mixture of a solid electrolyte with any one of LiCoO₂, LiMn₂O₄, LiAl₂O₃, LiCoPO₄, LiFePO₄ and Liₓ(NiₐCobMn_{c})O₂ (0.5 < x < 1.3, a ≤ 0.5, 0 < b < 1, 0 < c < 1, a + b + c = 1), or a mixture of two or more of them, as a second positive electrode active material, onto the surface of the first positive electrode active material layer, followed by drying, to form a second positive electrode active material layer.

12. The method for manufacturing a positive electrode for a lithium secondary battery according to claim 11, wherein the second positive electrode active material is coated or doped with the solid electrolyte.
